# EUROPÄISCHE PATENTSCHRIFT

(11) **EP 2 162 046 B1**
(45) Veröffentlichungstag und Bekanntmachung des Hinweises auf die Patenterteilung: **30.08.2017**
(21) Anmeldenummer: 08760872.5
(22) Anmeldetag: 11.06.2008
(51) Int. Cl.: A47L 15/42, A47L 15/46, D06F 33/02, D06F 37/30, D06F 39/08, H02P 5/695

(54) **ELEKTRISCHE ANTRIEBSEINRICHTUNG FÜR EIN WASSERFÜHRENDES HAUSHALTSGERÄT**
ELECTRIC DRIVE UNIT FOR A WATER-BEARING DOMESTIC APPLIANCE
DISPOSITIF D'ENTRAÎNEMENT ÉLECTRIQUE POUR UN APPAREIL MÉNAGER À CIRCULATION D'EAU

(30) Priorität: 29.06.2007 DE 102007030072
(43) Veröffentlichungstag der Anmeldung: 17.03.2010
(73) Patentinhaber: BSH Hausgeräte GmbH, 81739 München (DE)
(72) Erfinder: NAVARRA, Pietro, 42015 Correggio (IT); ROSENBAUER, Michael, 86756 Reimlingen (DE); ROSSTEUSCHER, Hans-Dieter, 89537 Giengen (DE)
(74) Vertreter: Thoma, Lorenz
(86) Internationale Anmeldenummer: PCT/EP2008/057324
(87) Internationale Veröffentlichungsnummer: WO 2009/003809

(56) Entgegenhaltungen:
- DE-A1- 3 913 639
- DE-A1- 10 139 928
- DE-A1- 10 339 130
- DE-A1-102004 003 536
- DE-A1-102004 019 343

## Beschreibung

Die vorliegende Erfindung betrifft eine elektrische Antriebseinrichtung für ein wasserführendes Haushaltsgerät. Ferner betrifft die Erfindung ein Haushaltgerät mit wenigstens einer Flüssigkeitspumpe und einer elektrischen Antriebseinrichtung.

In einem Wasser führenden Haushaltsgerät, insbesondere in einer Geschirrspülmaschine, ist es üblich, dass mehrere Arten von Flüssigkeitspumpen eingesetzt werden. Beispielsweise ist eine Flüssigkeitspumpe als Umwälzpumpe zum Einsatz während des Spülbetriebs und eine weitere Flüssigkeitspumpe als Abwasserpumpe zum Abpumpen der Lauge nach Beendigung eines Spülprogramms bzw. eines Programmabschnitts vorgesehen. Derartige Flüssigkeitspumpen sind im Sumpf eines Geschirrspülers angeordnet und werden im Allgemeinen aus dem Versorgungsnetz eines Haushaltes mit Netzspannung versorgt. Diese Art von Flüssigkeitspumpen ist beispielsweise auch im Bereich der Waschmaschinen bekannt, die im Allgemeinen sowohl über Umwälzpumpen als auch über Abwasserpumpen verfügen.

Aus DE 101 39 928 A1 ist ein Geschirrspüler-Pumpenantrieb bekannt, bei dem als Pumpenmotor ein Gleichspannungsmotor mit Permanentmagnet-Rotor und mit Sensor-Kommutator zur rotorstellungsabhängigen Umpolung der Durchflutung der Feldwicklung eingesetzt wird. Der Feldstromkreis kann aus dem auf einer Platine der Betriebsschaltung vorhandenen Gleichrichter gespeist werden, der den Betrieb des Gleichstrommotors an einem Wechselspannungsnetz ermöglicht. Der zweiphasige Gleichstrommotor weist zwei gegensinnige Teilspuren je Feldwicklung auf, die über einen Umschalter abwechselnd bestromt werden. Ein für die Polarität des als Nassläufer im Luftspalt gelagerten mehrpoligen permanentmagnetischen Rotors empfindlicher Kommutator gibt vor, welche der beiden Feldwicklungen momentan zu durchfluten ist.

In DE 39 13 639 A1 ist eine Modularverdrahtung in Haushalt-Geschirrspülmaschinen beschrieben, die eine gemeinsame Verteilungs-Leiterplatine verwendet und alle Kleinverbraucher mit 42 Volt Schutzspannung speist. Dadurch lässt sich die Verdrahtungsanordnung übersichtlich gestalten sowie ein Einsatz kostengünstiger Niederspannungs-Bauteile realisieren. Alle Zuleitungen der Lastverbraucher wie Beheizung und Pumpenmotore werden an entsprechende Einschaltkontakte angeschlossen und nach Betätigung eines Hauptsteuerschalters mit Netzspannung versorgt. Auf der Lastseite einer Verteilungs-Leiterplatine ist ein Schutztransformator vorgesehen, dessen Sekundärseite eine Nennspannung von höchstens 42 Volt aufweist. Diese gilt als Schutzkleinspannung und versorgt wiederum über den Hauptsteuerschalter die Steuerseite und somit die Kleinverbraucher.

In DE 103 39 130 A1 wird eine Haushaltsmaschine wie eine Waschmaschine oder Geschirrspülmaschine mit einem Flüssigkeitskreislauf beschrieben, bei der die Ansteuerung der Antriebsmotoren für die Flüssigkeitspumpen derart erfolgt, dass wenigstens eine der beiden Pumpen an eine Kontrolleinheit für die Motorsteuerung und/oder Regelung zuschaltbar ist. Hierbei ist zentraler Bestandteil der Kontrolleinheit ein Computer mit einem Prozessor, wobei die Kontrolleinheit als zentrale Steuer- und Regeleinheit der Haushaltsmaschine Verwendung finden kann. Sie übernimmt die Funktion als Steuereinheit für zwei Flüssigkeitspumpen, insbesondere eine Umwälzpumpe und eine Laugenpumpe. Weiterhin ist eine Vielzahl von Sensoren an einer Anschlussseite des Computers vorgesehen, welche die Erfassung eines oder mehrerer Maschinenparameter übernehmen. Einer dieser Sensoren ist beispielsweise als Lastsensor zur Erfassung einer Pumpenlast bzw. des aufgenommenen Pumpenstroms ausgebildet, wobei dann abhängig von den Sensordaten eine Reihe von Aktuatoren von der Kontrolleinheit betätigt werden. Für den Pumpenantrieb können beispielsweise Gleichspannungsmotoren verwendet werden, so dass der durch die Welligkeit der Betriebsspannung bislang gelegentlich erzeugte Brummton vollständig entfällt. Im Niedervoltbereich kann beispielsweise eine Gleichspannung in Höhe von 42 Volt oder kleiner verwendet werden, wobei sich in diesem Zusammenhang insbesondere Sicherheitsvorteile erzielen lassen. Mit der Vielzahl der an den Computer angeschlossenen Sensoren und Aktuatoren ist die Antriebssteuerung vergleichsweise aufwendig und muss verschiedene Versorgungssysteme für die unterschiedlichen Sensoren und Aktuatoren sowie für den Pumpenantrieb bereitstellen.

Der vorliegenden Erfindung liegt die Aufgabe zu Grunde, eine elektrische Antriebseinrichtung für Flüssigkeitspumpen in einem Wasser führenden Haushaltsgerät anzugeben, durch welche sich ein technisch einfacheres elektronisches Motormanagement für den Antrieb einer Flüssigkeitspumpe realisieren lässt. Weiterhin ist es Aufgabe der vorliegenden Erfindung, ein entsprechendes Wasser führendes Haushaltsgerät anzugeben.

Diese Aufgabe wird durch eine Vorrichtung gemäß Patentanspruch 1 gelöst.

Die elektrische Antriebseinrichtung gemäß der Erfindung enthält einen steuerbaren Umrichter zur Bereitstellung einer Speisespannung an einem mehrphasigen, insbesondere einem 3-phasigen Spannungsnetz. Mit dem mehrphasigen Spannungsnetz verbindbar ist wenigstens ein Elektromotor, der insbesondere als permanent-magnetisch erregter Synchronmotor ausgeführt ist und zum Antrieb einer Flüssigkeitspumpe vorgesehen ist. Eine Steuerungseinrichtung dient zur Ansteuerung des Umrichters zum Betrieb des Elektromotors am mehrphasigen Spannungsnetz. Zusätzlich ist eine weitere elektrische Einrichtung vorgesehen, die über eine Verbindungseinrichtung mit einem dem Umrichter vorgeschalteten Laststrom führenden Zwischenkreis verbindbar ist, wobei die elektrische Einrichtung wenigstens einen weiteren Elektromotor für eine weitere Flüssigkeitspumpe und/oder ein Gebläse und/oder wenigstens ein Ventil umfasst.

Gemäß der Erfindung ist es somit ermöglicht, durch eine gemeinsame Steuerungseinrichtung zur Ansteuerung des Umrichters, der eine Speisespannung an dem mehrphasigen, insbesondere 3-phasigen Spannungsnetz bereitstellt, nicht nur den Elektromotor für den Antrieb einer Flüssigkeitspumpe zu steuern, sondern auch weitere elektrische Komponenten wie beispielsweise weitere Elektromotoren für weitere Flüssigkeitspumpen oder ein elektrisch angesteuertes Ventil. Damit ist es ermöglicht, ein einheitliches Versorgungssystem sowohl für die Versorgung der Elektromotoren für die Flüssigkeitspumpen als auch für weitere elektrische Komponenten bereit zu stellen, dessen zentrale Bestandteile der steuerbare Umrichter, das 3-phasige Spannungsnetz sowie die Steuerungseinrichtung zur Ansteuerung des Umrichters sind. Damit kann die Steuerungseinrichtung, beispielsweise in Form eines Motorcontrollers, weitere Steuerungsfunktionen für die weiteren elektrischen Komponenten übernehmen. Damit sind keine weiteren eigenen separaten Controller für diese Komponenten notwendig. Die Verwendung von permanent-magnetisch erregten Synchronmotoren für den Pumpenantrieb hat dabei den Vorteil, dass sich diese ohne aufwendige Sensortechnik über den Umrichter ansteuern lassen, so dass sich insgesamt ein technisch einfacheres elektronisches Motormanagement insbesondere ohne Drehzahlsensor realisieren lässt.

In einer Weiterbildung der erfindungsgemäßen elektrischen Antriebseinrichtung werden mehrere Elektromotoren zum Antrieb jeweiliger Flüssigkeitspumpen vorgesehen, die als permanent-magnetisch erregte Synchronmotoren ausgeführt sind, und die über eine Verbindungseinrichtung mit dem mehrphasigen Spannungsnetz verbindbar sind. Hierbei ist die Steuerungseinrichtung als für die Elektromotoren gemeinsame Steuerungseinrichtung zur Ansteuerung des Umrichters zum Betrieb einer der Elektromotoren am mehrphasigen Spannungsnetz ausgebildet.

In einer vorteilhaften Ausführungsform der Erfindung ist eine Rückkopplungsverbindung zum Abgriff einer elektrischen Messgröße am mehrphasigen Spannungsnetz und zur Einspeisung der elektrischen Messgröße in die Steuerungseinrichtung vorgesehen. Hierbei steuert die Steuerungseinrichtung den Umrichter in Abhängigkeit der elektrischen Messgröße an. Damit ist die Steuerungseinrichtung ohne aufwendige Sensortechnik in der Lage, den Umrichter zum Betrieb des Elektromotors zum Antrieb einer Flüssigkeitspumpe mit Hilfe der elektrischen Messgröße anzusteuern. Insbesondere wird der Umrichter derart angesteuert, dass sich eine gezielte Drehrichtung und Drehzahl der betriebenen Flüssigkeitspumpe einstellt.

In einer vorteilhaften Ausführungsform wird als elektrische Messgröße eine induzierte Spannung an einer oder mehreren Leitern des mehrphasigen Spannungsnetzes erfasst, und daraus eine Reihenfolge der Ansteuerung von Stromventilen des Umrichters bestimmt. Auf diese Art ist es möglich, ohne Verwendung beispielsweise eines HallSensors die Drehrichtung und Drehzahl des Elektromotors festzustellen und den Umrichter bzw. dessen Stromventile entsprechend anzusteuern, dass sich die gewünschte Drehrichtung und Drehzahl des Motors einstellt. Insbesondere wird durch die Steuerungseinrichtung als elektrische Messgröße eine induzierte Spannung an einem oder mehreren Leitern des mehrphasigen Spannungsnetzes erfasst, welcher bzw. welche zu diesem Zeitpunkt durch den Umrichter nicht mit einer Spannung beaufschlagt werden. Durch diese Ausgestaltung einer Steuerungseinrichtung kann mittels der elektrischen Messgröße erfasst werden, wenn sich die betriebene Flüssigkeitspumpe in einem blockierten Zustand befindet. Der Umrichter wird daraufhin durch die Steuerungseinrichtung derart angesteuert, dass eine Speisespannung des Umrichters abgeschaltet wird. Diese Art der Steuerung macht sich dabei zu Nutze, dass im blockierten Zustand der betriebenen Flüssigkeitspumpe eine entsprechend niedrige Drehzahl des Motors auftritt, was durch die Steuerungseinrichtung durch Feststellung der Drehzahl detektiert werden kann. Dadurch kann auf einen Motorschutzschalter verzichtet werden, da ein Schutzmechanismus über die Feststellung der Drehzahl und Drehrichtung implementierbar ist. Damit kann auf den Einsatz eines Lastsensors zur Erfassung des Laststroms verzichtet werden.

In entsprechender Weise kann durch die Steuerungseinrichtung mittels der elektrischen Messgröße erfasst werden, wenn sich die betriebene Flüssigkeitspumpe in einem Leerlauf-Zustand befindet, wobei die Steuerungseinrichtung den Umrichter derart ansteuert, dass eine Speisespannung des Umrichters abgeschaltet wird. Dadurch ist es insbesondere ermöglicht, das so genannte Schnorchelgeräusch beim Abpumpen von Flüssigkeit aus dem Gerät zu vermeiden, das entsteht, wenn sich die Flüssigkeitspumpe im Leerlauf-Betrieb befindet.

Erfindungsgemäß ist der Umrichter eingangsseitig mit einem Zwischenkreis verbunden, der den Laststrom für eine betriebene Flüssigkeitspumpe führt. Weiterhin ist ein Netzteil vorgesehen, das ausgangsseitig mit dem Zwischenkreis verbunden ist, zur Erzeugung einer ausgangsseitigen Zwischenkreisspannung aus einer eingangsseitigen Netzspannung. Insbesondere wird durch das Netzteil vorteilhaft eine Zwischenkreisspannung im Niedervoltbereich erzeugt, insbesondere eine Zwischenkreisspannung von etwa 42 Volt. Damit ergeben sich eine Reihe von sicherheitsrelevanten Vorteilen, da vor allem keine Erdung der elektrischen Bauteile nötig ist sowie stromführende Teile berührbar sein dürfen. Weiterhin müssen nicht die Kriech- und Luftstrecken, wie im Betrieb mit Netzspannung, eingehalten werden. Eine Spannungsverschleppung bzw. ein parasitärer Spannungsabfall, z. B. bei Leckagen, ist unproblematisch.

Weitere vorteilhafte Aus- und Weiterbildungen der Erfindung sind in Unteransprüchen angegeben.

Die Erfindung betrifft ferner ein Haushaltsgerät mit wenigstens einer Flüssigkeitspumpe und einer oben beschriebenen elektrischen Antriebseinrichtung.

Die Erfindung wird im Folgenden anhand der in der Zeichnung dargestellten Figuren, die vorteilhafte Ausführungsformen der vorliegenden Erfindung darstellen, näher erläutert. Es zeigen
- Figur 1: eine Ausführungsform einer erfindungsgemäßen elektrischen Antriebseinrichtung zum Betrieb von mehreren Flüssigkeitspumpen in einem Geschirrspüler sowie eines Wasserventils an einer gemeinsamen Steuerungseinrichtung,
- Figuren 2 bis 4: weitere vorteilhafte Ausführungsformen einer erfindungsgemäßen elektrischen Antriebseinrichtung für Flüssigkeitspumpen in einer gegenüber Figur 1 ausschnittsartigen Ansicht.

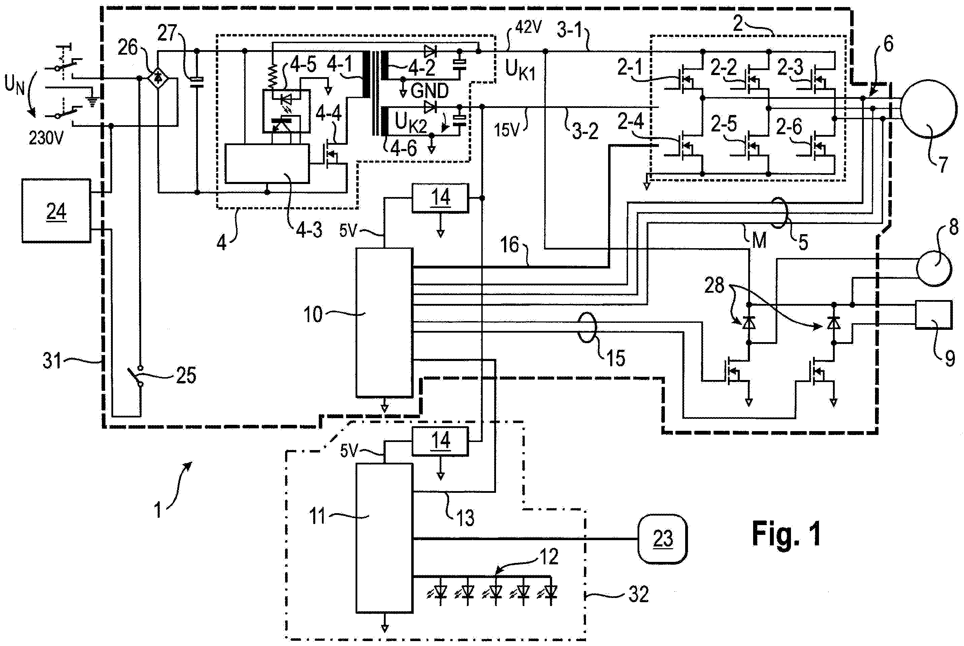

In Figur 1 ist eine Übersichtsdarstellung einer elektrischen Antriebseinrichtung gemäß der Erfindung zum Betrieb von Flüssigkeitspumpen in einer Geschirrspülmaschine näher dargestellt. Eine vergleichbare elektrische Antriebseinrichtung kann auch beispielsweise in einer Waschmaschine zum Betrieb von entsprechenden Flüssigkeitspumpen in gleicher Art und Weise eingesetzt werden. Die elektrische Antriebseinrichtung 1 gemäß Figur 1 weist auf einer Leistungsplatine (so genanntes Power Board) 31 ein Netzteil 4 auf, das eingangsseitig über einen Gleichrichter 26 und einen Kondensator 27 mit einer Netzspannung U_{N} in Höhe von beispielsweise 230 V verbunden ist. An dieser Netzspannung U_{N} ist beispielsweise auch ein Heizelement 24 über einen Schalter 25 angeschlossen. Das Netzteil 4 beinhaltet eine an sich bekannte Sperrwandler-Topologie, die insbesondere eine Drossel 4-1 aufweist, die mit der Drossel 4-2 in Wirkverbindung steht. Ebenso steht die Drossel 4-1 mit der Drossel 4-6 in Wirkverbindung. Das Schaltelement 4-4 in Form eines Transistors wird durch eine Steuerschaltung 4-3 angesteuert, welche ihrerseits durch einen Optokoppler 4-5 angesteuert wird. Der Optokoppler 4-5 ist seinerseits über eine Rückkopplungsverbindung mit dem Zwischenkreis 3-1 verbunden. Da diese Topologie und ihre Funktionsweise einem Fachmann grundsätzlich geläufig ist, wird auf eine nähere Funktionsbeschreibung verzichtet.

Das Netzteil 4 ist ausgangsseitig mit einem Laststrom führenden Zwischenkreis 3-1 verbunden zur Erzeugung der ausgangsseitigen Zwischenkreis-Gleichspannung U_{K1} beispielsweise in Höhe von 42 V. Weiterhin ist das Netzteil 4 ausgangsseitig mit einem Zwischenkreis 3-2 verbunden zur Erzeugung einer ausgangsseitigen Zwischenkreis-Gleichspannung U_{K2} von 15 V. Über den Zwischenkreis 3-2 werden die Steuerungsschaltungen 10 und 11 mit Spannung versorgt, wobei jeweilige Umsetzschaltungen 14 die Spannung von 15 V in eine Spannung von 5 V umsetzen, die eingangsseitig an den Steuerungsschaltungen 10 und 11 anliegen.

Weiterhin ist ein steuerbarer Umrichter 2 vorgesehen zur Bereitstellung einer Speisespannung an einem 3-phasigen Spannungsnetz 6. Der Umrichter 2 weist einen monolithisch integrierten Schaltkreis auf, auf welchem die Schaltventile 2-1 bis 2-6 (in Form von MOSFETS) des Umrichters 2 angeordnet sind. Die Schaltventile 2-1 bis 2-6 werden dabei über eine Steuerungsverbindung 16 von der Steuerungsschaltung 10 angesteuert, wobei die Ansteuerung der Schaltventile 2-1 bis 2-6 durch die Steuerungsverbindung 16 im Detail aus Übersichtlichkeitsgründen nicht näher dargestellt ist. Der Eingang des Umrichters 2 ist mit dem Zwischenkreis 3-1 verbunden, so dass die Schaltventile 2-1 bis 2-3 mit ihrem oberen Drain-Anschluss an der Spannung U_{K1} von 42 V und die Schaltventile 2-4 bis 2-6 mit ihrem unteren Source-Anschluss an dem Bezugspotential GND anliegen. Der Umrichter 2 stellt am Spannungsnetz 6 ein flexibles Spannungssystem bereit, was durch das 3-phasige Stellglied ermöglicht ist. Hierbei wird aus der Gleichspannung des Zwischenkreises 3-1 ein 3-phasiges Spannungssystem mit variabler Frequenz und Spannungsamplitude bereitgestellt. Der Umrichter 2 arbeitet beispielsweise nach dem Modell eines 3-phasigen Pulswechselrichters, der durch entsprechende Steuerung der Schaltventile unterschiedliche Schaltzustände einnimmt und somit ein Drehspannungssystem schafft, um den Elektromotor einer Flüssigkeitspumpe 7 anzutreiben.

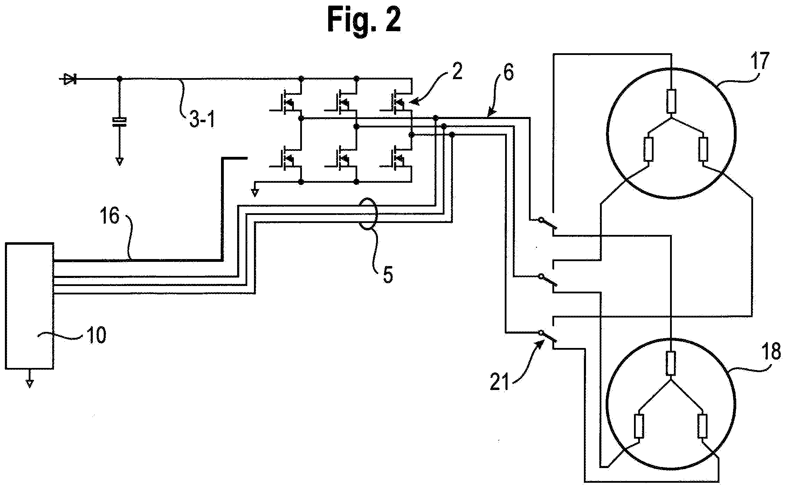

Der Elektromotor der Flüssigkeitspumpe 7, der im Folgenden anhand der Figuren 2 bis 4 noch näher dargestellt wird, ist als permanent-magnetisch erregter Synchronmotor ausgeführt und mit dem 3-phasigen Spannungsnetz verbunden. Die Flüssigkeitspumpe 7 ist beispielsweise als Umwälzpumpe einer Geschirrspülmaschine ausgebildet. Der permanent-magnetisch erregte Synchronmotor zählt zu der Klasse der Drehfeldmaschinen und weist eine symmetrische 3-strängige Statorwicklung auf, die mit 3-phasiger Wechselspannung gespeist wird. Das Erregerfeld wird im Allgemeinen durch flache Permanentmagneten erzeugt, die gleichmäßig am Umfang des Rotors gemäß ihrer Polarität befestigt sind. Die Steuerschaltung 10, beispielsweise in Form eines Motorcontrollers, dient zur Ansteuerung des Umrichters 2 zum Betrieb des Elektromotors der Flüssigkeitspumpe 7 am 3-phasigen Spannungsnetz, wobei eine Rückkopplungsverbindung 5 zum Abgriff einer elektrischen Messgröße M am 3-phasigen Spannungsnetz 6 und zur Einspeisung der Messgröße M in die Steuerungsschaltung 10 vorgesehen ist. Hierbei wird die Messgröße M bei der Ansteuerung des Umrichters 2 durch die Steuerungsschaltung 10 mit berücksichtigt.

Neben der Flüssigkeitspumpe 7 mit zugehörigem Elektromotor sind weitere elektrische Einrichtungen vorgesehen, im Beispiel nach Figur 1 in Form einer weiteren Flüssigkeitspumpe 8 und eines Wasserventils 9. Die Flüssigkeitspumpe 8 ist beispielsweise als Abwasserpumpe einer Geschirrspülmaschine ausgeführt und über eine Verbindungseinrichtung 28 mit dem Zwischenkreis 3-1 verbindbar. Die Flüssigkeitspumpe 8 umfasst ebenfalls einen Elektromotor, der beispielsweise als permanent-magnetischer Gleichstrommotor ausgeführt ist. Die Verbindungseinrichtung 28 weist Transistoren und Dioden in der gemäß Figur 1 dargestellten Verschaltung auf, wobei die Transistoren der Verbindungseinrichtung 28 über eine Steuerleitung 15 durch die Steuerschaltung 10 ansteuerbar sind, um die Flüssigkeitspumpe 8 bzw. das Wasserventil 9 zu- bzw. abzuschalten.

Die Geschirrspülmaschine mit der erfindungsgemäßen Antriebseinrichtung umfasst weiterhin eine Haupt-Geräteelektronik 32, die von der Leistungsplatine 31 entfernt angeordnet ist und eine weitere Steuerungsschaltung 11 aufweist, die über ein Bussystem 13 mit der Steuerungsschaltung 10 kommuniziert. Die Steuerungsschaltung 11 ist mit einem LED-Display 12 verbunden. Weiterhin ist eine Sensoreinrichtung 23 vorgesehen, die beispielsweise Temperatursensoren, Drucksensoren oder dergleichen zur Detektion entsprechender Maschinenparameter aufweist. In einer Weiterentwicklung der Erfindung wäre es ohne weiteres möglich, die Steuerungsschaltungen 10 und 11 zu einer gemeinsamen Steuerungseinrichtung zusammenzufassen, die beispielsweise auf der Leistungsplatine 31 angeordnet ist.

Gemäß der Darstellung nach Figur 1 sind diejenigen der elektrischen Komponenten der Antriebseinrichtung 1, welche einen Laststrom zum Betrieb der Flüssigkeitspumpen 7 und 8 sowie des Wasserventils 9 führen, sowie die Steuerungsschaltung 10 auf der Leistungsplatine 31 in einem Bereich des Geschirrspülers angeordnet, der von der Haupt-Geräteelektronik 32 entfernt angeordnet ist. Beispielsweise ist die Haupt-Geräteelektronik 32 in einem Türbereich des Geschirrspülers angeordnet, wohingegen die Ansteuerung der Pumpmotoren und anderen elektronischen Bauteile über eine Buskommunikation von der Haupt-Geräteelektronik 32 zur Motorelektronik auf der Leistungsplatine 31 erfolgt. Dies hat den Vorteil von kurzen Versorgungsleitungen und außerdem den Vorteil, dass der Kabelbaum zur und von der Haupt-Geräteelektronik, welcher durch den Türbereich geht, entsprechend geringadrig ausgeführt werden kann.

In Figur 2 ist eine weitere Ausführungsform einer erfindungsgemäßen elektrischen Antriebseinrichtung in gegenüber Figur 1 ausschnittsweiser Darstellung gezeigt. Zum Betrieb der Flüssigkeitspumpe 7 gemäß Figur 1 ist ein Elektromotor 17 vorgesehen, der als permanent-magnetisch erregter Synchronmotor ausgeführt ist und dessen 3-strängige Statorwicklung in Sternschaltung in Figur 2 näher dargestellt ist. Über eine Verbindungseinrichtung 21, gebildet durch eine parallel betätigbare Schalteranordnung, ist der Elektromotor 17 mit dem 3-phasigen Spannungsnetz 6 verbindbar. Es ist ein weiterer Elektromotor 18, beispielsweise zum Betrieb der Abwasserpumpe 8 gemäß Figur 1, vorgesehen, der gleichartig zum Elektromotor 17 aufgebaut ist. Der Elektromotor 18 ist über die Verbindungseinrichtung 21 mit dem 3-phasigen Spannungsnetz 6 verbindbar, so dass die Flüssigkeitspumpe 7 über den Elektromotor 17 und die Flüssigkeitspumpe 8 über den Elektromotor 18 abwechselnd über den Umrichter 2 am 3-phasigen Spannungsnetz 6 betreibbar sind. Hierbei fungiert die Steuerungsschaltung 10 als für die Elektromotoren 17 und 18 gemeinsame Steuerungseinrichtung für die Ansteuerung des Umrichters 2 zum Betrieb einer der Elektromotoren 17 oder 18 am 3-phasigen Spannungsnetz 6.

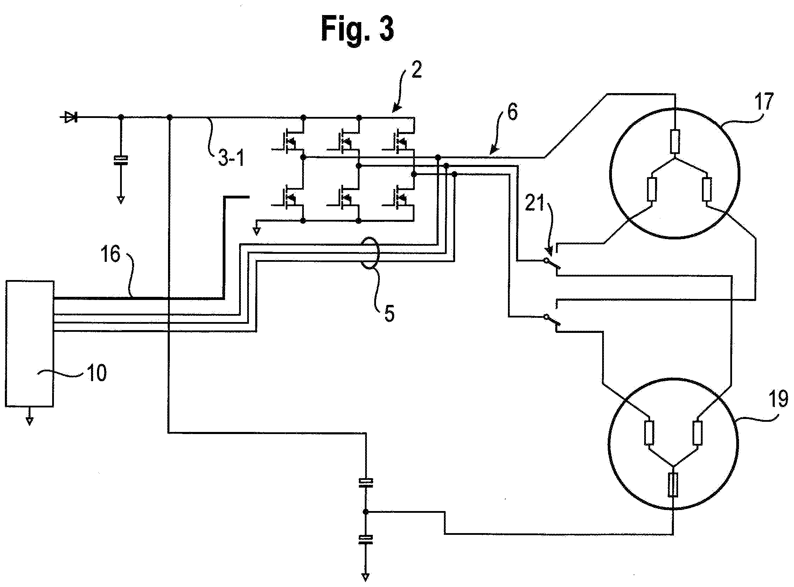

In Figur 3 ist eine weitere Ausführungsform einer elektrischen Antriebseinrichtung gemäß der Erfindung gezeigt, die im Unterschied zur Ausführungsform gemäß Figur 2 an Stelle des 3-phasigen permanent-magnetischen Synchronmotors 18 einen 2-phasigen permanent-magnetischen Synchronmotor 19 aufweist. Dieser ist über die Verbindungseinrichtung 21 mit einem Teil des 3-phasigen Spannungsnetzes 6, genauer mit zwei Leitern des Spannungsnetzes verbindbar. Der Elektromotor 19 dient beispielsweise ebenfalls zum Antrieb einer Flüssigkeitspumpe 8 gemäß Figur 1.

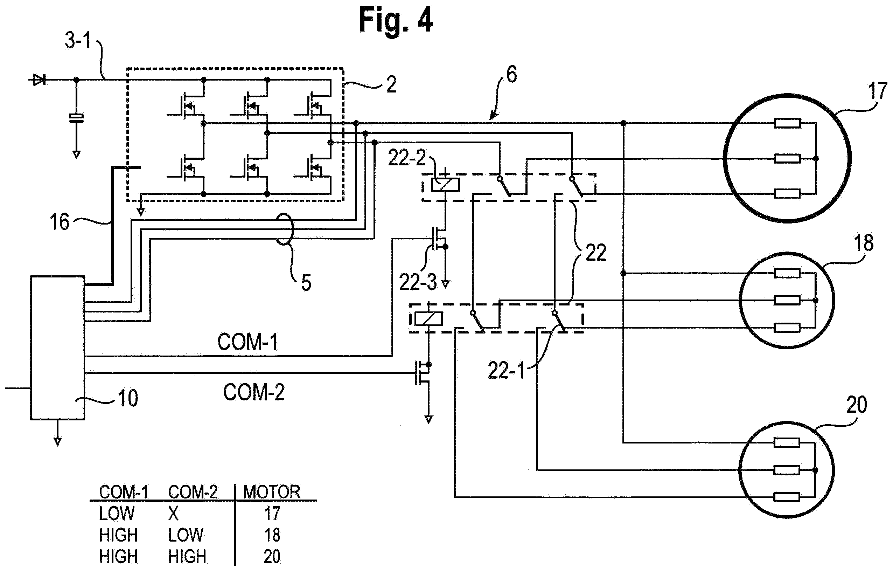

In Figur 4 ist eine gegenüber den Ausführungsformen nach Figuren 2 und 3 erweiterte Ausführungsform der Erfindung gezeigt, bei der neben den Elektromotoren 17 und 18 zum Betrieb jeweiliger Flüssigkeitspumpen ein Elektromotor 20 vorgesehen ist, beispielsweise um ein Gebläse bzw. einen Lüfter der Geschirrspülmaschine zu betrieben. Die Elektromotoren 17, 18 und 20 sind jeweils als 3-phasige permanent-magnetisch erregte Synchronmotoren (sogenannte PM Brushless DC Technik) ausgeführt. Sie sind über eine Verbindungseinrichtung 22 mit dem 3-phasigen Spannungsnetz 6 verbindbar, wobei die Verbindungseinrichtung 22 durch die Steuerungsschaltung 10 ansteuerbar ist. Die Verbindungseinrichtung 22 weist Schalter 22-1 auf sowie Relais 22-2 zur Betätigung der Schalter 22-1. Die Relais 22-2 sind ihrerseits über einen jeweiligen Transistor 22-3 schaltbar, wobei der obere Teil der Verbindungseinrichtung 22 durch das Steuersignal COM-1 angesteuert wird und der untere Teil der Verbindungseinrichtung 22 durch Steuersignal COM-2. Entsprechend der im unteren Teil der Figur 4 dargestellten Wahrheitstabelle werden, je nach Signalzustand des Steuersignals COM-1 und des Steuersignals COM-2, die einzelnen Elektromotoren 17, 18 und 20 mit dem Spannungsnetz 6 alternativ verbunden.

Ein Vorteil der erfindungsgemäßen elektrischen Antriebseinrichtung ist, dass auf einen Drehzahlsensor zur Messung der Drehrichtung und Drehzahl der betriebenen Flüssigkeitspumpe verzichtet werden kann. Durch die Steuerungsschaltung 10 wird über die Rückkopplungsverbindung 5 als elektrische Messgröße M eine induzierte Spannung an einer oder mehreren Leitern des 3-phasigen Spannungsnetzes 6 erfasst, so dass daraus eine Drehrichtung und Drehzahl des Elektromotors durch die Steuerungsschaltung 10 berechnet werden kann. Anhand dieser Berechnung wird eine Reihenfolge der Ansteuerung der Stromventile 2-1 bis 2-6 des Umrichters 2 bestimmt. Insbesondere wird die induzierte Spannung an denjenigen Leitern des 3-phasigen Spannungsnetzes 6 erfasst, welcher bzw. welche zu diesem Zeitpunkt durch den Umrichter 2 nicht mit einer Spannung beaufschlagt werden. Dadurch kann vorteilhaft festgestellt werden, wenn sich die betriebene Flüssigkeitspumpe in einem blockierten Zustand befindet, so dass daraufhin die Speisespannung des Umrichters 2 abgeschaltet wird. Ebenso kann festgestellt werden, wenn sich die betriebene Flüssigkeitspumpe in einem Leerlauf-Zustand befindet, so dass daraufhin ebenfalls die Speisespannung des Umrichters 2 abgeschaltet werden kann, um insbesondere das so genannte Schnorchelgeräusch zu vermeiden. Durch diese Art der Steuerung kann insbesondere auf einen Motorprotektor in Form eines Schutzschalters verzichtet werden. Des Weiteren kann auf einen Hall-Sensor zur Drehzahlmessung des Elektromotors verzichtet werden.

Durch die Bereitstellung einer Betriebsspannung im Niedervoltbereich für das erfindungsgemäße elektrische Antriebssteuersystem gemäß den Figuren 1 bis 4 ergeben sich eine Reihe von weiteren Vorteilen gegenüber einem Betrieb an Netzspannung. Insbesondere hat der Betrieb der elektronischen Komponenten mit 42 V DC für die Konstruktion eines Geschirrspülers die folgenden bedeutenden Vorteile:
Es können an die elektrischen Komponenten der Antriebseinrichtung geringere sicherheitsrelevante Anforderungen gestellt werden, wie oben bereits angesprochen. Für den Umrichter kann ein kostengünstiger so genannter "Six-Switch" monolithisch integrierter Schaltkreis für den Betrieb an Niedervoltspannung eingesetzt werden. Durch Verwendung von Niedervolt-Elektromotoren werden dickere Wicklungsdrähte in einer kleineren Windungszahl verwendet, wodurch Qualitäts- und Kostenverbesserungen der Wicklung ermöglicht werden. Durch den verwendeten Motortyp in Form eines permanent-magnetisch erregten Synchronmotors sind höhere Leistungen durch erhebliche Wirkungsgradverbesserungen gegenüber einem Synchronmotor ermöglicht. Insbesondere lässt sich ein niedrigeres Betriebsgeräusch erzielen, da sich insbesondere kein 100 Hz-Brummton in Folge einer Welligkeit der Netzspannung einstellt. Weiterhin kann die Konstruktion der Flüssigkeitspumpe andersartig gestaltet werden, so dass die Flüssigkeitspumpe gegenüber Grobkörper unempfindlicher wird. Die elektrische Ausnutzung der Elektromotoren kann erhöht werden, da der Betrieb an der gleichförmigen 42 V Betriebsspannung unabhängig von Schwankungen der Netzspannung erfolgt. Damit ist es nicht mehr erforderlich, die Motoren im Hinblick auf Netzspannungsschwankungen überzudimensionieren.

Hinsichtlich eines elektrisch betriebenen Ventils ergeben sich vergleichbare Vorteile, insbesondere sind erhöhte Magnetkräfte sowie ein niedrigeres Betriebsgeräusch ermöglicht. Durch die Verwendung von dickeren Wicklungsdrähten in einer geringeren Windungszahl sind Qualitäts- und Kostenverbesserungen bei der Herstellung der Wicklung ermöglicht. Des Weiteren wird die elektrische Ausnutzung erhöht, da eine gleichförmige Betriebsspannung sowohl für den Pumpenantrieb als auch für die übrigen Komponenten bereitgestellt wird.

Hierbei ist noch zu erwähnen, dass die Spannung von 42 V beispielhaft gewählt ist. Es können in diesem Zusammenhang auch DC-Betriebsspannungen unterschiedlicher Höhe gewählt werden. Beim Einsatz der so genannten Aquastop-Ventiltechnik, die beim Bruch des Zulaufsschlauchs ein Auslaufen von Flüssigkeit am Wasseranschluss verhindert, ist es ermöglicht, entsprechend schwächer isolierte Leitungen von Stromzuführungen des Wasserventils zu verwenden. Außerdem ist es nicht notwendig, das Wasserventil mit einer Vergussmasse zu vergießen.

## Patentansprüche

1. Elektrische Antriebseinrichtung für ein wasserführendes Haushaltsgerät, insbesondere Haushalts-Geschirrspülmaschine oder Waschmaschine, wenigstens umfassend:
- einen steuerbaren Umrichter (2) zur Bereitstellung einer Speisespannung an einem mehrphasigen, insbesondere einem 3-phasigen, Spannungsnetz (6),
- eine Steuerungseinrichtung (10, 11) zur Ansteuerung des Umrichters (2) zum Betrieb eines Elektromotors (17) am mehrphasigen Spannungsnetz (6),
- mit einer weiteren elektrischen Einrichtung (18, 19, 20, 9), die wenigstens einen weiteren Elektromotor (18, 19, 20) für eine weitere Flüssigkeitspumpe (8) und/oder ein Gebläse (20) und/oder wenigstens ein Ventil (9) umfasst, **dadurch gekennzeichnet, dass** die weitere elektrische Einrichtung (18, 19, 20, 9) über eine Verbindungseinrichtung (28, 21, 22) mit einem dem Umrichter (2) vorgeschalteten Laststrom führenden Zwischenkreis (3-1) verbindbar ist, und dass der Umrichter (2) eingangsseitig mit dem Zwischenkreis (3-1) verbunden ist und ein Netzteil (4) vorgesehen ist, das ausgangsseitig mit dem Zwischenkreis (3-1) verbunden ist, zur Erzeugung einer ausgangsseitigen Zwischenkreis-Gleichspannung (UK1) aus einer eingangsseitigen Netzspannung (UN).

2. Elektrische Antriebseinrichtung nach Anspruch 1, **dadurch gekennzeichnet, dass**
- mehrere Elektromotoren (17, 18, 19) zum Antrieb jeweiliger Flüssigkeitspumpen (7, 8) angeschlossen werden können, die als permanent-magnetisch erregte Synchronmotoren ausgeführt sind und die über eine Verbindungseinrichtung (21, 22) mit dem mehrphasigen Spannungsnetz (6) verbindbar sind, und
- die Steuerungseinrichtung (10, 11) als für die Elektromotoren gemeinsame Steuerungseinrichtung zur Ansteuerung des Umrichters (2) zum Betrieb einer der Elektromotoren (17, 18, 19) am mehrphasigen Spannungsnetz (6) ausgebildet ist.

3. Elektrische Antriebseinrichtung nach Anspruch 2, **dadurch gekennzeichnet, dass**
- eine Rückkopplungsverbindung (5) zum Abgriff einer elektrischen Messgröße (M) am mehrphasigen Spannungsnetz (6) und zur Einspeisung der elektrischen Messgröße (M) in die Steuerungseinrichtung (10) vorgesehen ist,
- wobei die Steuerungseinrichtung (10, 11) den Umrichter (2) in Abhängigkeit der elektrischen Messgröße (M) ansteuert.

4. Elektrische Antriebseinrichtung nach Anspruch 3, **dadurch gekennzeichnet, dass** die Steuerungseinrichtung (10, 11) anhand der elektrischen Messgröße (M) den Umrichter (2) derart ansteuert, dass sich eine gezielte Drehrichtung und Drehzahl der betriebenen Flüssigkeitspumpe (7) einstellt.

5. Elektrische Antriebseinrichtung nach Anspruch 3 oder 4, **dadurch gekennzeichnet, dass** durch die Steuerungseinrichtung (10, 11) als elektrische Messgröße (M) eine induzierte Spannung an einem oder mehreren Leitern des mehrphasigen Spannungsnetzes (6) erfasst wird und daraus eine Reihenfolge der Ansteuerung von Stromventilen (2-1 bis 2-6) des Umrichters (2) bestimmt wird.

6. Elektrische Antriebseinrichtung nach einem der Ansprüche 3 bis 5, **dadurch gekennzeichnet, dass** durch die Steuerungseinrichtung (10, 11) als elektrische Messgröße (M) eine induzierte Spannung an einem oder mehreren Leitern des mehrphasigen Spannungsnetzes (6) erfasst wird, welcher bzw. welche zu diesem Zeitpunkt durch den Umrichter (2) nicht mit einer Spannung beaufschlagt werden.

7. Elektrische Antriebseinrichtung nach einem der Ansprüche 3 bis 6, **dadurch gekennzeichnet, dass** durch die Steuerungseinrichtung (10, 11) mittels der elektrischen Messgröße (M) erfasst wird, wenn sich die betriebene Flüssigkeitspumpe (7) in einem blockierten Zustand befindet, und diese daraufhin den Umrichter (2) derart ansteuert, dass eine Speisespannung des Umrichters (2) abgeschaltet wird.

8. Elektrische Antriebseinrichtung nach einem der Ansprüche 3 bis 7, **dadurch gekennzeichnet, dass** durch die Steuerungseinrichtung (10, 11) mittels der elektrischen Messgröße (M) erfasst wird, wenn sich die betriebene Flüssigkeitspumpe (7) in einem Leerlauf-Zustand befindet, und diese daraufhin den Umrichter (2) derart ansteuert, dass eine Speisespannung des Umrichters (2) abgeschaltet wird.

9. Elektrische Antriebseinrichtung nach einem der vorhergehenden Ansprüche, **dadurch gekennzeichnet, dass** das Netzteil (4) eine Zwischenkreisspannung (UK1) im Niedervoltbereich erzeugt, insbesondere eine Zwischenkreisspannung von etwa 42 V.

10. Elektrische Antriebseinrichtung nach einem der vorhergehenden Ansprüche, **dadurch gekennzeichnet, dass** der Umrichter (2) einen monolithischen integrierten Schaltkreis aufweist, auf welchem die Schaltventile (2-1 bis 2-6) des Umrichters angeordnet sind.

11. Elektrische Antriebseinrichtung nach einem der vorhergehenden Ansprüche, **dadurch gekennzeichnet, dass** ein Rotor wenigstens eines permanent-magnetisch erregten Synchronmotors (17) als Nassläufer ausgebildet ist.

12. Elektrische Antriebseinrichtung nach einem der vorherigen Ansprüche, **dadurch gekennzeichnet, dass** diejenigen der elektrischen Komponenten der Antriebseinrichtung (1), welche einen Laststrom zum Betrieb der Flüssigkeitspumpe (7) führen, sowie die Steuerungseinrichtung (10) in einem Bereich (31) des Haushaltsgeräts angeordnet sind, welcher von einer Haupt-Geräteelektronik (32) des Haushaltsgeräts entfernt angeordnet ist.

13. Haushaltsgerät mit wenigstens einer Flüssigkeitspumpe und einer elektrischen Antriebseinrichtung nach einem der vorherigen Ansprüche.

## Claims

1. Electric drive unit for a water-bearing domestic appliance, in particular a domestic dishwasher or washing machine, at least comprising:
- a controllable converter (2) for providing a supply voltage from a multiphase, in particular a 3-phase, voltage system (6),
- a control device (10, 11) for activating the converter (2) to operate an electric motor (17) from the multiphase voltage system (6),
- with an additional electrical device (18, 19, 20, 9), which comprises at least one additional electric motor (18, 19, 20) for another hydraulic pump (8) and/or a blower (20) and/or at least one valve (9), **characterised in that**
the additional electrical device (18, 19, 20, 9) can be connected via a connection device (28, 21, 22) to a load-current-carrying DC link (3-1) upstream of the converter (2), and that the converter (2) is connected on the input side to the DC link (3-1) and a power supply unit (4) which is connected on the output side to the DC link (3-1) is provided for producing an output side DC link direct voltage (U_{K1}) from an input side system voltage (U_{N}).

2. Electric drive unit according to claim 1, **characterised in that**
- to drive respective hydraulic pumps (7, 8), a plurality of electric motors (17, 18, 19) can be connected which are implemented as permanent magnet excited synchronous motors and which can be connected to the multiphase voltage system (6) via a connection device (21, 22), and
- the control device (10, 11) is implemented as a common control device for the electric motors, serving to activate the converter (2) to operate one of the electric motors (17, 18, 19) from the multiphase voltage system (6).

3. Electric drive unit according to claim 2, **characterised in that**
- a feedback connection (5) is provided for tapping off an electrical measured variable (M) from the multiphase voltage system (6) and feeding said electrical measured variable (M) into the control device (10),
- wherein the control device (10, 11) activates the converter (2) as a function of the electrical measured variable (M).

4. Electric drive unit according to claim 3, **characterised in that** the control device (10, 11) activates the converter (2) on the basis of the electrical measured variable (M) such that a specific rotation direction and speed of the operated hydraulic pump (7) is obtained.

5. Electric drive unit according to claim 3 or 4, **characterised in that** an induced voltage on one or more conductors of the multiphase voltage system (6) is detected by the control device (10, 11) as the electrical measured variable (M) and an activation sequence of flow control valves (2-1 to 2-6) of the converter (2) is determined therefrom.

6. Electric drive unit according to one of claims 3 to 5, **characterised in that** an induced voltage on one or more conductors of the multiphase voltage system (6) to which a voltage is not being applied by the converter (2) at that point in time is detected by the control device (10, 11) as the electrical measured variable (M).

7. Electric drive unit according to one of claims 3 to 6, **characterised in that**, by means of the electrical measured variable (M), the control device (10, 11) detects when the operated hydraulic pump (7) is in a blocked state, and said device then activates the converter (2) such that a supply voltage provided by the converter (2) is turned off.

8. Electric drive unit according to one of claims 3 to 7, **characterised in that**, by means of the electrical measured variable (M), the control device (10, 11) detects when the operated hydraulic pump (7) is in an idle state, and said device then activates the converter (2) such that a supply voltage provided by the converter (2) is turned off.

9. Electric drive unit according to one of the preceding claims, **characterised in that** the power supply unit (4) produces a DC link voltage (U_{K1}) in the low voltage range, in particular a DC link voltage of approximately 42 V.

10. Electric drive unit according to one of the preceding claims, **characterised in that** the converter (2) contains a monolithic integrated circuit on which the converter's switching valves (2-1 to 2-6) are disposed.

11. Electric drive unit according to one of the preceding claims, **characterised in that** a rotor of at least one permanent magnet excited synchronous motor (17) is implemented as a wet rotor.

12. Electric drive unit according to one of the preceding claims, **characterised in that** the components of the electric drive unit (1) which carry a load current for operating the hydraulic pump (7), and also the control device (10), are disposed in an area (31) of the domestic appliance which is remote from the appliance's main electronics (32).

13. Domestic appliance with at least one hydraulic pump and an electric drive unit according to one of the preceding claims.

## Revendications

1. Dispositif d'entraînement électrique pour un appareil ménager à circulation d'eau, en particulier un lave-vaisselle domestique ou un lave-linge, comprenant au moins :
- un convertisseur commandable (2) pour la mise à disposition d'une tension d'alimentation sur un réseau à plusieurs phases, en particulier triphasé (6),
- un dispositif de commande (10, 11) pour l'actionnement du convertisseur (2) afin d'exploiter un moteur électrique (17) sur un réseau à plusieurs phases (6),
- avec un autre dispositif électrique (18, 19, 20, 9), qui englobe au moins un autre moteur électrique (18, 19, 20) pour une autre pompe à fluide (8) et/ou une soufflante (20) et/ou au moins une valve (9), **caractérisé en ce que** l'autre dispositif électrique (18, 19, 20, 9) peut être relié via un dispositif de liaison (28, 21, 22) à un circuit intermédiaire conducteur de courant de charge (3-1) branché en amont du convertisseur (2), et **en ce que** le convertisseur (2) est relié côté entrée au circuit intermédiaire (3-1) et un bloc d'alimentation (4) est prévu, lequel est relié côté sortie au circuit intermédiaire (3-1) afin de générer côté sortie une tension continue de circuit intermédiaire (UK1) au départ d'une tension de réseau côté entrée (UN).

2. Dispositif d'entraînement électrique selon la revendication 1, **caractérisé en ce que**
- plusieurs moteurs électriques (17, 18, 19) pour l'entraînement de pompes à fluide respectives (7, 8) peuvent être raccordés, lesquels sont exécutés sous forme de moteurs synchrones à aimantation permanente et qui peuvent être reliés via un dispositif de liaison (21, 22) au réseau à plusieurs phases (6), et
- le dispositif de commande (10, 11) est exécuté sous la forme d'un dispositif de commande commun pour les moteurs électriques en vue de l'actionnement du convertisseur (2) pour l'exploitation de l'un des moteurs électriques (17, 18, 19) sur le réseau à plusieurs phases (6).

3. Dispositif d'entraînement électrique selon la revendication 2, **caractérisé en ce qu'**
- une liaison de rétroaction (5) est prévue pour la prise d'une grandeur de mesure électrique (M) sur le réseau à plusieurs phases (6) et pour l'injection de la grandeur de mesure électrique (M) dans le dispositif de commande (10),
- dans lequel le dispositif de commande (10, 11) actionne le convertisseur (2) en fonction de la grandeur de mesure électrique (M).

4. Dispositif d'entraînement électrique selon la revendication 3, **caractérisé en ce que** le dispositif de commande (10, 11) actionne le convertisseur (2) de telle manière à l'aide de la grandeur de mesure électrique (M) qu'un sens de rotation et un régime cibles de la pompe à fluide (7) exploitée s'observe.

5. Dispositif d'entraînement électrique selon la revendication 3 ou 4, **caractérisé en ce que** le dispositif de commande (10, 11) saisit une tension induite en tant que grandeur de mesure électrique (M) sur un ou plusieurs conducteurs du réseau à plusieurs phases (6) et une série d'actionnement de valves de débit (2-1 à 2-6) du convertisseur (2) est déterminée sur cette base.

6. Dispositif d'entraînement électrique selon l'une des revendications 3 à 5, **caractérisé en ce que** le dispositif de commande (10, 11) saisit une tension induite en tant que grandeur de mesure électrique (M) sur un ou plusieurs conducteurs du réseau à plusieurs phases (6) qui n'est/ne sont pas mis sous tension par le convertisseur (2) à cet instant.

7. Dispositif d'entraînement électrique selon l'une des revendications 3 à 6, **caractérisé en ce que** le dispositif de commande (10, 11) saisit l'état bloqué de la pompe de fluide (7) exploitée au moyen de la grandeur de mesure électrique (M) et actionne ensuite le convertisseur (2) de telle sorte à couper une tension d'alimentation du convertisseur (2).

8. Dispositif d'entraînement électrique selon l'une des revendications 3 à 7, **caractérisé en ce que** le dispositif de commande (10, 11) saisit l'état de fonctionnement à vide de la pompe de fluide (7) exploitée au moyen de la grandeur de mesure électrique (M) et actionne ensuite le convertisseur (2) de telle sorte à couper une tension d'alimentation du convertisseur (2).

9. Dispositif d'entraînement électrique selon l'une des revendications précédentes, **caractérisé en ce que** le bloc d'alimentation (4) génère une tension de circuit intermédiaire (UK1) de faible tension, en particulier une tension de circuit intermédiaire d'environ 42 V.

10. Dispositif d'entraînement électrique selon l'une des revendications précédentes, **caractérisé en ce que** le convertisseur (2) présente un circuit de couplage monolithique intégré sur lequel les valves de couplage (2-1 à 2-6) du convertisseur sont disposées.

11. Dispositif d'entraînement électrique selon l'une des revendications précédentes, **caractérisé en ce qu'**un rotor d'au moins un moteur synchrone à aimantation permanente (17) est exécuté sous forme de rotor noyé.

12. Dispositif d'entraînement électrique selon l'une des revendications précédentes, **caractérisé en ce que** les composants électriques du dispositif d'entraînement (1) qui transmettent un courant de charge pour l'exploitation de la pompe à fluide (7) ainsi que le dispositif de commande (10) sont disposés dans une zone (31) de l'appareil ménager à l'écart d'une électronique principale (32) de l'appareil ménager.

13. Appareil ménager avec au moins une pompe à fluide et un dispositif d'entraînement électrique selon l'une des revendications précédentes.
